# EUROPEAN PATENT APPLICATION

(11) **EP 1 225 526 A2**
(43) Date of publication of application: **24.07.2002**
(21) Application number: 01123294.9
(22) Date of filing: 05.10.2001
(51) Int. Cl.: G06F 17/60

(54) **Record media delivery system, record media delivery method, record media delivery program and information transmission device**

(30) Priority: 06.10.2000 JP 2000308284
(71) Applicant: RISO KAGAKU CORPORATION, Tokyo (JP)
(72) Inventor: Ikeda, Hiroyuki, Riso Kagaku Corporation, Inashiki-gun, Ibaraki-ken (JP); Hashimoto, Koichi, Riso Kagaku Corporation, Inashiki-gun, Ibaraki-ken (JP); Hanzawa, Hiroshi, Riso Kagaku Corporation, Inashiki-gun, Ibaraki-ken (JP)
(74) Representative: HOFFMANN - EITLE

(57) **Abstract**

A media delivery system, a media delivery method, a record media delivery program and a computer readable record medium are disclosed wherein respective media post units (12) read out record information recorded in transmission media (22), a relevant addressee is inputted in transmission media (22), and record information and delivery end information of transmission media (22) are transmitted through a communication network (18). In contrast, in a delivery media recording section (14), record information and relevant addressee information of transmission media (22) is received via a communication network (20), record information is recorded on received media (24) and relevant addressee information is added to received media (24) to be delivered to the relevant addressee.

## Description

### BACKGROUND OF THE INVENTION

The present invention relates to a record media delivery system which delivers record media, such as various media on which information is recorded in an analog form involving postal cards, cassette tapes, etc. and various media on which information is recorded in a digital form involving floppy disks, etc., to a remote destination, a record media delivery method, a record media delivery program and an information transmission device for use in a record media delivery process and, more particularly, to a technology to realize a record media delivery process at a high speed and in a highly reliable manner by replacing a long-distance transportation and delivery process with an electronic delivery practice in a digital form.

Currently, it has been a usual practice to utilize record media that record and keep various information items in a variety of situations in life. In addition to record media such as a postal card, a cassette tape and a video tape, etc., which are generally utilized in a wide use, it has been a recent practice to widely utilize media is recorded in a digital form, such as a MD, a CD-ROM, etc.

Now, in an event where the aforementioned record media are delivered to a remote destination, it is a normal practice to utilize a postal system or a delivery system. However, such a delivery system or a delivery method for record media using such a postal system and a delivery system encounter various problems to be solved as will be discussed below.

Firstly, in general, a delivery process with the use of the postal system and the delivery system undergoes a long-distance transportation work for record media with labors. As a consequence, since there is a need for a remarkably great deal of labor and time starting from the delivery of record media to the termination of receipt of record media, a difficulty is encountered in quickly delivering record media.

Secondly, in an event that a delivery end for record media is a country where there are severe natural phenomena such as frequent heavy rainy days or a country where there is poor infrastructure for traffic systems, the presence of a difficulty in estimating a time interval required for delivering record media provides a difficulty in delivering record media in a rapid and reliable manner.

Thirdly, in an event that the delivery end for record media is located in an estranged district, there are many instances where there are smaller amount of delivery products, to be delivered to such an estranged district, than those of the other districts. Accordingly, there is a delay in delivery time, with a resultant difficulty encountered in providing a high quality delivery service to clients of whole areas.

Other issues are encountered in that there are problems in reading out information at the deliver end. That is, in a convention delivery expedient, when an addresser delivers, for example, the MD as record media of information, such information is arrived at the delivery end as the same MD. However, in a case where the addressee has no readout unit for the MD, a problem is encountered in reading out information that is delivered to the addressee.

### SUMMARY OF THE INVENTION

The present invention has been made with a view to addressing the above issues and has an object of the present invention to provide a record media delivery system which enables to deliver record media to a remote destination in a rapid and reliable manner.

It is another object of the present invention to provide a record media delivery method which enables to deliver record media to a remote destination in a rapid and reliable manner.

It is a further object of the present invention to provide a record media delivery program which enables to deliver record media to a remote destination in a rapid and reliable manner.

It is a still further object of the present invention to provide an information transmission device for record media which enable to deliver record media to a remote destination in a rapid and reliable manner.

When addressing the above issues, inventors of the subject patent application have reached a solution by which record media can be delivered to a remote destination in a rapid and reliable manner by replacing the long-distance transportation and delivery process with the electronic delivery process in the digital form while simultaneously overcoming the shortcomings encountered in reading out information at the aforementioned delivery ends, with a technical concept having the following features.

According to a first aspect of the present invention, there is provided a record media delivery system which comprises an information transmitting section including a readout unit for reading out record information recorded in first record media, an input unit for preparing relevant addressee information to which second record media is to be delivered, and a transmitting unit for transmitting the record information and the delivery end information via a communication network, and a delivery media recording section including a receiver unit for receiving the record information and relevant addressee information from the information transmitting section via the communication network, and an output unit for recording said record information on the second record media to allow the second record media to be added with the relevant addressee information to be outputted.

With such a record media delivery system, the information transmitting section converts the content of the first record media into data form and transmits as record information, and the delivery media record reproducing section records received record information as the second record media.

Also, the record media delivery system further includes a server unit which interconnects the information transmitting section and the delivery media recording section via the communication network. The server unit further includes a memory unit which stores database for keeping relevant addressee information of the second record media. With the record media delivery system, when the information transmitting section transmits record media, the relevant addressee information for the second record media is obtained at the information transmitting section.

It is desired for the server unit to keep information related to a delivery status for the second record media. As such, in the record media delivery system, it is possible to obtain the delivery status of the second record media at the information transmitting section and the delivery media recording section.

In the record media delivery system, further, the first and second media may include a postal card, the readout unit may include an image scanner and the output unit may include a printer.
As such, the record media delivery system allows the first record media, even when it is a postal card, to be converted into a data form and to be transmitted as record information.

In the record media delivery system, further, the delivery information includes a category of the second record media. As such, the record media delivery system allows the category of record media of the relevant addressee to be preliminarily designated by the addresser, with a resultant flexible solution to the reading out capability at the delivery end.

According to a second aspect of the present invention, there is provided a record media delivery method which comprises the steps of reading out record information recorded in first record media, preparing relevant addressee information to which second record media is to be delivered, transmitting the relevant addressee information and the record information via a communication network, receiving the delivery end information and the record information via a communication network, recording the record information on the second record media, adding the relevant addressee information to the second record media that is recorded with the record information, and delivering said second record media with reference to the relevant addressee information.

Such a record media delivery method, the content of the first record media is converted into data to be transmitted as record information in the information transmitting side, and received record information is recorded as the second record media.

In the record media delivery method of the present invention, it is preferable to read out information of the address card described with more than or equal to one delivery end and to prepare relevant addressee information of the second record media by referring to information of the address card. As such, in the record media delivery method, record information and delivery end information are prepared to transmit the first record media.

In the record media delivery method of the present invention, also, it is preferable to prepare delivery end information of the second record media by referring to a database that keeps delivery end information connected via the communication network. As such, in the record media delivery method, the relevant addressee information is obtained at the information transmitting side by referring the content of the database to transmit the relevant addressee information and the record information.

In the record media delivery method of the present invention, the communication network includes the Internet. As such, in the media delivery method, the content of the first record media is transmitted as the record information to the information receiving side via the Internet network.

According to a third aspect of the present invention, there is provided an information transmission device which comprises a readout unit for reading out record information recorded in first record media, an input unit for preparing relevant addressee information to which second record media is to be delivered, and a transmitting unit for transmitting the record information and the relevant addressee information via a communication network.

With such an information transmission device, the content of the first record media is converted into data as record information to transmit the record information and the relevant addressee information and the information receiving side delivers the same as the second record information.

In the information transmission device of the present invention, the first record media includes a postal card, and the readout unit preferably includes an image scanner. With such an information transmission device, even when the first record and second media include the postal card, the record information is prepared and the information receiving side delivers the second record media as the postal card.

In the information transmission device of the present invention, further, the communication network includes the Internet. As such, the information transmission device transmits the record information via the Internet network.

In the information transmission device of the present invention, furthermore, the relevant addressee information include a category of the first record media. As such, the record media delivery system enables the record media category of the delivery end to be preliminarily designated by the addresser, with a resultant flexible solution to the reading out capability at the delivery end.

According to a fourth aspect of the present invention, there is provided a record media delivery program which comprises the steps of reading out record information recorded in first record media, preparing relevant addressee information to which second record media is to be delivered, transmitting the relevant addressee information and the record information via a communication network, receiving the relevant addressee information and the record information via the communication network, recording the record information on second record media, adding the relevant addressee information to the second record media recorded with the record information, and delivering the second record media by referring to the relevant addressee information.

According to a fifth aspect of the present invention, there is provided a record medium which comprises the steps of reading out record information recorded in first record media, preparing relevant addressee information to which second record media is to be delivered, transmitting the relevant addressee information and the record information via a communication network, receiving the delivery end information and the record information via the communication network, recording said record information on second record media, adding the relevant addressee information to the second record media recorded with the record media, and delivering the second record media by referring to the relevant addressee information.

### BRIEF DESCRIPTION OF THE DRAWINGS

FIG. 1 is a block diagram illustrating a preferred embodiment of a record media delivery system according to the present invention;
FIG. 2 is a block diagram of a structural overview of a media post section shown in FIG. 1;
FIG. 3 is a view for illustrating the content of information involved in transmission data which is transmitted from the media post section shown in FIG. 1;
FIG. 4 a block diagram for illustrating a structural overview of a delivery media recording section shown in FIG. 1;
FIG. 5 is a block diagram for illustrating a structural overview of a server unit shown in FIG. 1;
FIG. 6 is a general flow diagram for illustrating the basic sequence of operational steps to be executed when transmitting transmission media with the record media delivery system according to the present invention;
FIGS. 7A and 7B are schematic views for illustrating receiver input screens; and
FIG. 8 is a schematic view for illustrating other structure of the media post section applying the present invention.

### DETAILED DESCRIPTION OF THEPREFERRED EMBODIMENTS

To describe the present invention more in detail, a preferred embodiment of a record media delivery system, a record media delivery program and an information transmission device to carry out a record media delivery method according to the present invention will be described below in detail with reference to the drawings.

The record media delivery system, which is generally designated at 10, is applied to a delivery process for record media which are recorded with information in an analog form, such as a postcard, a letter paper, a photograph, a cassette tape, a video tape, etc., and with information in a digital form, such as a FD (Floppy-Disk), a CD-ROM, a MD (Mini-Disc), a CD-RW (CD-Rewritable), DVD (Digital Versatile Disc), an IC record media (for example, a memory stick), etc.

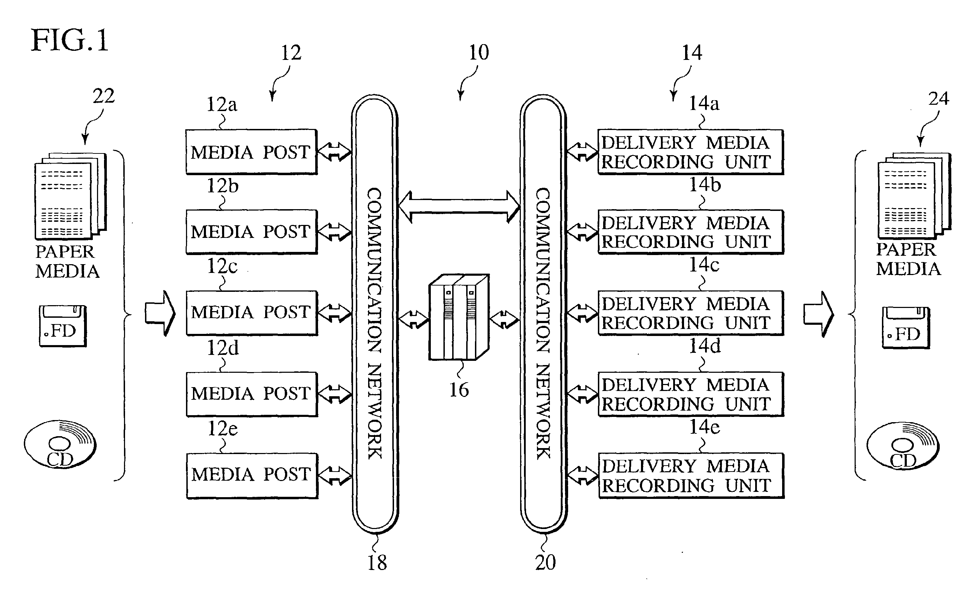

As seen in FIG. 1, the record media delivery system 10 includes a media post section 12, a delivery media recording section 14, a server unit 16, and first and second communication networks 18, 20.

In particular, the media post section 12 is composed of a plurality of media posts 12a to 12e which read out requested information of transmission media 22 to be delivered and which transmit the readout record information to the server unit 16 or to the delivery media recording section 14. The delivery media record reproducing section 14 is composed of a plurality of delivery media recording units 14a to 14e which are located in a delivery base station to receive record information transmitted from the media post section 12 and the server unit 16 for recording received record information onto selected one of given record media 24 to be delivered to an address designated by the media post section 12. The server 16 functions to control and support a delivery operation of requested information of transmission media 22 between the media post section 12 and the delivery media recording section 14. To this end, the media post section 12, the server 16 and the delivery media reproducing section 14 are mutually connected to one another via the first and second communication networks 18, 20.

Here, each of the communication networks 18, 20 refers to a general network system such as an Internet system based on for example TCP (Transmission Control Protocol)/IP (Internet Protocol), a WAN (Wide Area Network) and a LAN (Local Area Network), etc., that use telecommunication technologies.

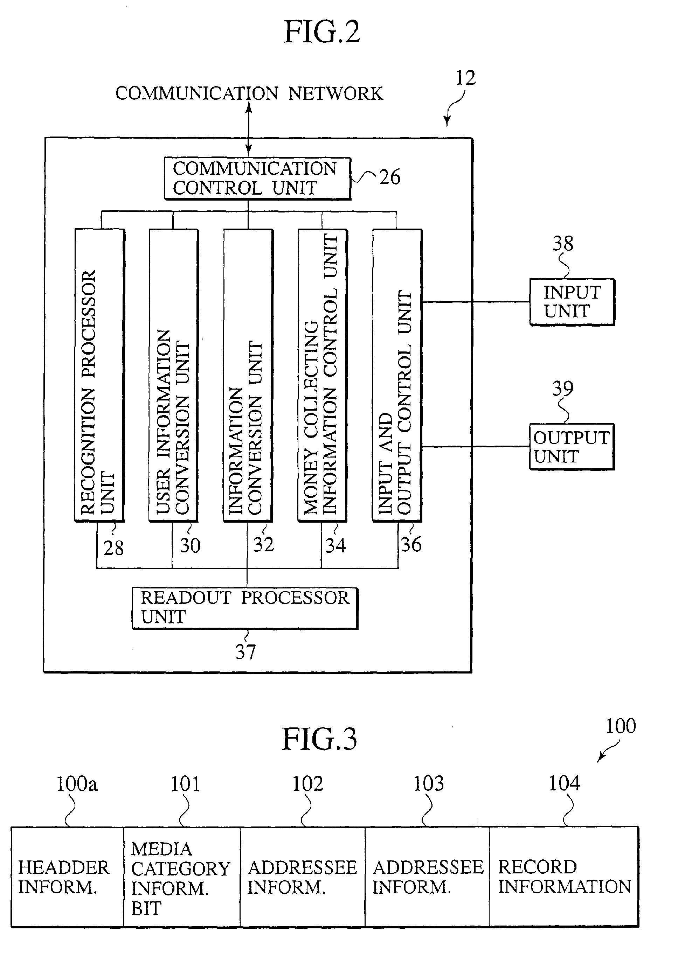

Now, a structural overview of the media post section 12 is described below in detail in conjunction with FIG. 2.

The media post section 12 is located in a suitable area in a town or may be configured in a structure which is portable. In addition, the media post section 12 has at least a function such as a device drive, a device interface, etc., involving an image scanner, an analog/digital converter, a FD drive and a CD-ROM, for reading out requested information from the transmission media 22 and for transmitting record information of the transmission media 22 to the delivery media recording section 14 via the communication networks 18, 20.

More particularly, as shown in FIG. 2, the media post section 12 includes a communication control unit 26, a recognition processor unit 28, a user information conversion unit 30, an information conversion unit 32, a money collecting information control unit 34, an input and output control unit 36, a readout processor unit 37, an input unit 38 and an output unit 39.

The communication control unit 26 functions to interconnect the media post section 12 and the communication networks 18, 20 to allow requested record information involved in transmission media 22 to be delivered to be converted into a form suitable for transmission over the communication networks 18, 20 and to be transmitted to the delivery media record recording section 14. In a case where the communication networks 18, 20 are composed of existing telephone circuit networks, the communication control unit 26 converts record information in the digital form into record information in the analog form.

In the illustrated embodiment, transmission data 100, which is transmitted from the communication control unit 26, takes a format shown in FIG. 3 and is composed of a header information item (for example, a TCP header, an IP header, etc.) 100a remaining at the head according to a protocol (for example, according to TCP, IP) to be transmitted via the communication networks 18, 20, and consecutive transmission data components. The transmission data components include, starting from a header of data portions arranged in a sequential manner, a media category information bit 101, an addresser information item 102 related to an addresser of transmission media 22, a relevant addressee information item 103 related to a relevant addressee of received media 24 and a record information item 104 indicative of contents of received media 24. The media category information bit 101 represents information related to a category of media of the relevant addressee and the relevant addressee. Also, the addressee information item 102 and the relevant addressee information item 103 represent information related to the addresser and the addressee, respectively.

The recognition processor unit 28 functions as a device to perform a recognition process required for a delivery service. More particularly, the recognition processor unit 28 controls the recognition process that are carried out when logging in from the media post section 12 to the server 16 or when interconnecting the media post section 12 and the delivery media recording section 14 via the server 16.

Further, when a settlement is performed with a prepaid card or cash, the recognition processor unit 28 is not necessarily required.

The user information conversion unit 30 functions to convert a category of transmission media 22, addresser information and addressee information (address information) into data in a digital form. In particular, the user information conversion unit 30 alters regional numbers, which are used in a general delivery service, to particular numbers or addresses suited for the delivery service using the communication networks 18, 20.

The information conversion unit 32 functions to compress record information obtained from transmission media 22, which are transmitted to the delivery media recording section 14 or to the server unit 16, into a given compressed form. As a detailed compressed form, in a case where transmission media 22 is composed of the photograph, a RGB image which is readout from the readout processor unit 37 is compressed with a JPEG (Joint Photographic coding Experts Group). In a case where transmission media 22 is composed of the cassette tape, also, the information conversion unit 32 converts a signal, of NTSC (National Television System Committee) type which is readout from a tape reproducing head, into image data conform to a MPEG (Moving Picture Experts Group) type. In a case where transmission media 22 is composed of digital media such as the floppy disk or the CD-R, etc., furthermore, the information conversion unit 32 converts readout digital data into TAR, ZIP, LHA, etc.

The money collecting information unit 34 manages various money collecting information related to the delivery service of transmission media 22, communicates with and refers to the server unit16 via the communication network 18 and provides a client with a cost required for the delivery service.

The input and output control unit 36 controls various component parts in the information transmission device, and various input and output processing operations between the input unit 38 and the output unit 39. A graphical user interface constitutes an example of the input and output control unit 36. With such a control, it possible for a user to select information displayed over the output unit 39 in a touch panel method to allow various operational steps to be executed.

The readout processor unit 37 reads out information contained in transmission media 22 which the user has transmitted and reproduces record information in the digital form. The readout processor unit 37 may take various forms which vary in dependence on a category of media to be read out, and includes a device interface, to be connected to a reproducing unit for reproducing transmission media 22, such as an image scanner when reading out analog data such as the post card, the letter paper and the photograph etc., a media drive unit for driving media, such as a FD drive, a CD-ROM drive and a media card drive to be used in a case where transmission media is composed of other media, SCSI (Small Computer System Interface) and USB (Universal Serial Bus).

The input unit 38 serves as a device for enabling input of various input information required for the delivery service of record media such as the receivers' addresses, names etc., and may include, for example, a keyboard, ten keys, a mouse pointer, a touch panel, write pen, etc.

Further, in the readout processor unit 37, various input information, that is required for the delivery service operation of record media such as the receivers' addresses, names, etc., may be filled in a sheet involving relevant entry columns and may be readout from the readout processor unit 37, with readout data being arranged to pass through an OCR to perform a character recognition.

The output unit 39 is a device for outputting various information such as command information, error information, etc., that are delivered from the media post section 12, and may include, for example, a display device, a printer unit, a voice output unit, etc.

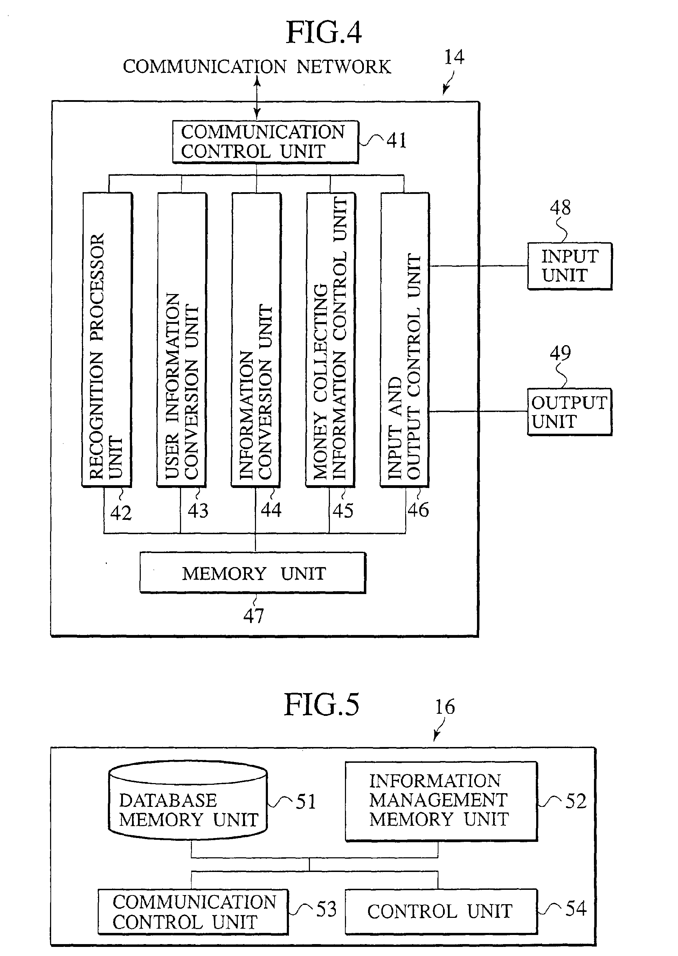

Now, the delivery media recording unit 14 is described below in detail with reference to FIG. 4.

The delivery media recording units 14a to 14e are located in respective unit areas that are marked out in a delivery area of received media 24 and may be located in, for example, delivery stations of a postal delivery service or of a goods delivery service, or shops which are scattered in all parts of a country, such as convenience stores. Also, if possible, each of the delivery media recording units may be constructed of a portable structure.

The delivery media recording section 14 includes a communication control unit 41, a recognition processor unit 42, a user information conversion unit 43, an information conversion unit 44, a money collecting information control unit 45, an input and output control unit 46, a memory unit 47, an input unit 48 and an output unit 49.

The communication control unit 41 functions to perform communication with the server unit 16 or the media post section 12 via the connected communication networks 18, 20 to execute a processing operation to receive transmitted data. The recognition processor unit 42 has the same function as the recognition processor unit 32 of the media post section 12 to implement a user recognition operation, etc., when receiving transmitted data. The money collecting control unit 45 produces money imposing information to be provided to the receiver for expenses caused when receiving the delivery service of transmitted data as received media 24.

The user information conversion unit 43 interprets and converts the media information bit, the addresser information and the relevant addressee information, which are contained in transmitted data, and stores such information with recorded information in the memory unit 47.

The information conversion unit 44 functions to retrieve record information received from the media post section 12 or the server unit16 and to store retrieved data in the memory unit 47 in respective addresses.

The memory unit 47 stores data, which the user information conversion unit 43 and the information conversion unit 44 have converted, by respective addresses. In particular, the memory unit 47 is constructed of a hard disk unit which enables to store data of a large volume. Further, the memory unit 47 keeps received data in its original condition and may transfer received data to the user information conversion unit 43 and the information conversion unit 44 to perform a conversion processing operation prior to outputting received data to the output unit 49.

The output unit 49 registers received record information as received media 24 and adds relevant addressee information related to address information and addresser information, to received media 24. For example, in a case where received media 24 includes the letter paper, the letter paper is recorded with record information and, consecutively, an envelope is printed with an address, with the letter paper being inserted into the envelope which is then sealed. More particularly, the output unit 49 may include a printer, a tape recorder, a CD-ROM device, etc., to allow record information to be recorded on corresponding media.

In the illustrated embodiment, further, although the media post section 12 and the delivery media recording section 14 have been described as being constructed in separate structures, these components may have the same structure as one another by adding respective function to the other.

Now, the server unit 16 is described below in detail with reference to FIG. 5.

As shown in FIG. 5, the server unit 16, which forms part of the system of the preferred embodiment, includes a database memory unit 51, an information management memory unit 52, a communication control unit 53 and a control unit 54.

The database memory unit 51 stores, in addition to user's personal information and credit information, database associated with various information of formerly used address information, delivered fixed form, etc. Here, the database memory unit 51 includes a relational database that preferably stores and keeps relevant addressee information and address information which are related to one another to provide an ease of management of database and of maintenance work.

The information management memory 52 serves to store and manage various information items related to the delivery service operation of record media such as user information, a delivery status (for example, the absence of address, unidentified address or during delivery service) of media in correlation with database stored in the database memory unit 51 via the Internet network.

The information management memory unit 52 may be mounted with a HTTP (HeperText Transfer Protocol) that has a HTTP server function to keep various information described in HTTP (Hepertext Markup Language), making it possible for the user to update user information or to refer to the delivery status.

The communication control unit 53 serves as a unit to allow the media post section 12 and the delivery media recording section 14 to communicate with one another according to the protocol of the communication networks 18, 20.

The control unit 54 controls the operation of component elements of the server 16.

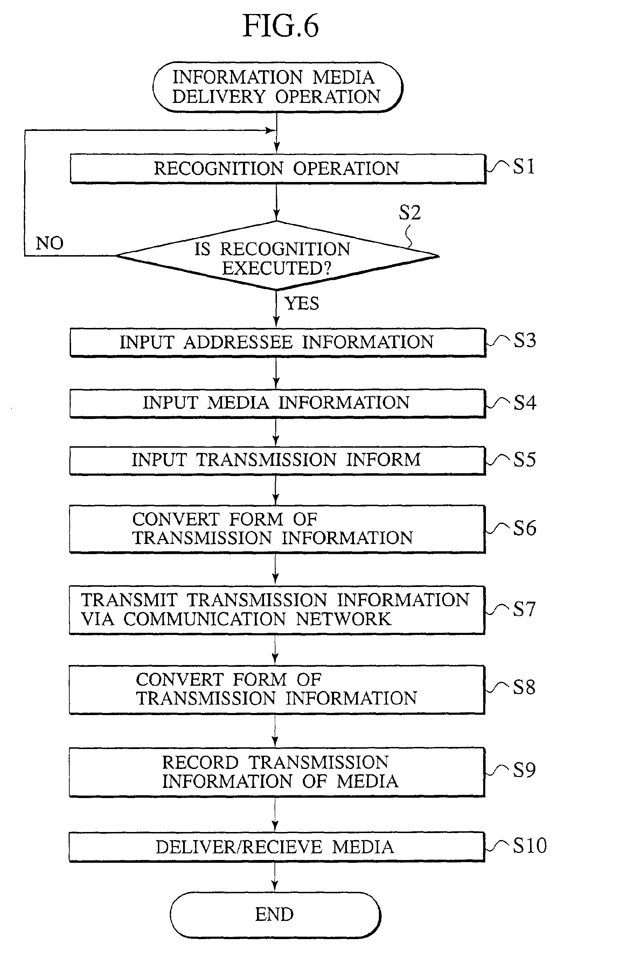

Now, the basic sequence of operational steps to be executed in the aforementioned media delivery system 10 when transmitting transmission media 22 to the delivery media recording section 14 as record media and subsequently delivering received media 24 received by the delivery media recording section 14 is described below in detail with reference to FIG. 6.

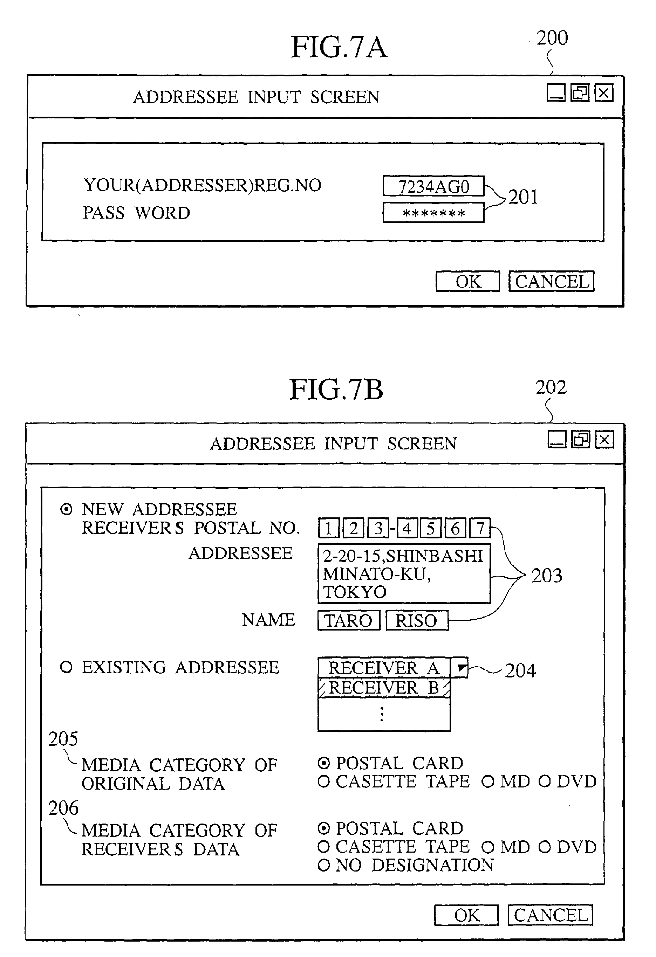

The media delivery system 10 commences the following operational steps in response to a user's request for the delivery service of transmission media 22.
(1) First, in step S1, the media post section 12 requests the user, who desires to obtain the delivery service for transmission media 22, to operate the input unit 38 and is responsive to such operation to execute recognition operation. Then, in step S2, upon completion of the recognition operation, the operation goes to the next step. In this respect, it is preferred that the media post section 12 transmits individual reference information to the recognition processor unit 28 in a preliminary step to complete registration of the user. With such a preliminary step, it is possible for the user to easily perform a subsequent recognition operation by inputting a registration number issued when the registration of the user is carried out. Also, in order to carry out the money collecting process via the communication network 18, credit information such as a credit card number, etc., during operation of the registration of the user may be transmitted. In this instance, in order to prevent unjust use of credit information by a third party, a cipher number or password may preferably be provided to ensure a security for the leakage of information.
(2) Upon completion of the recognition process, in step S3, the media post section 12 calls upon the user to operate the input unit 38 to input address information of particular transmission media 22 to be delivered. Here, it is desired that the input operation for the address to be delivered is carried out via a receiver's input screen 200 which is outputted over the output unit 39 as seen in FIGS. 7A and 7B, with a resultant remarkable decrease in load required for he input operation of the address.
   In the example shown in FIG. 7A, the user inputs the addresser's registration number and the password to ID input columns 201 that appear on an addressee input screen 200. Next, as seen in FIG. 7B, the user inputs the addressee postal number, the address, the names, etc. to the relevant addressee information columns 203 of an addressee input screen 202. Also, when it is desired to transmit record media to an existing addressee, a particular addressee may be selected from a menu 204 of the addressee list. Then, the category of record media recorded with data to be delivered is selected from a menu 205 of an addresser media category list and, consecutively, the category of media to be received by the addressee is selected from a menu 206 of the addressee media category list (see FIG. 7B).
   In a case where the database memory unit 51 of the server unit 16 is arranged to preliminarily store information related to the receiver, for example, the media post section 12 may communicate with the server unit 16 to provide a display of receiver's information to allow receiver's information to be selected from a menu screen of the pull down menu type. In addition, the media post section 12 may be arranged to allow a particular address to be written in a particular address card of a given form by the addresser per se and to allow the particular address to be input via the readout processor unit 37.
(3) In step S4, the media post section 12 inputs the category of transmission media 22 of the addresser and the addressee into the user information conversion unit 30. Here, the media category may be preliminarily settled as (A) the postal card, (B) the video tape, (C) the CD-ROM, etc., to allow the addressee to select the symbols indicative of the category of media.
(4) In step S5, the readout processor unit 37 reads out record information recorded in transmission media 22 to be delivered with a suitable readout method by referring to the kind of media category.
(5) In step S6, the user information conversion unit 30 converts addresser information, address information, a media category and record information into transmission data in the digital form as shown in FIG. 3. In a case where record information to be transmitted has a large capacity, the information conversion unit 32 compresses transmission information, and the user information conversion unit 30 may produce transmission data with compressed data. In such a case, transmission data includes information related to compression form.
(6) In step S7, the communication control unit 26 converts transmission data into the form of the communication network 18 and transmits transmission data via the server 16 or to the delivery media record reproducing section 14.
(7) In steps S8 and S9, the communication control unit 41 of the delivery media recording section 14 receives transmission data transmitted from the media post section 12 or from the server unit 16, the user information conversion unit 43 and the information conversion unit 44 converts received transmission data into the given form and, then, the memory unit 47 stores received data.
(8) In step S10, the input and output control unit 46 reads out record information from the memory unit 47 and records information on new received media 24 by means of corresponding one of the delivery media recording units 14a to 14e on the basis of information related to the media category contained in transmission data. Received media 24 that contains recorded information is then delivered to or directly received by the receiver per se when he is called up by the telephone to receive up that information, thereby completing a series of delivery service. Also, when delivering received media 24, the input and output control unit 46 preferably prints out address information onto a label, etc., that is added to received media 24 such that the delivery service is carried out in a quick manner.

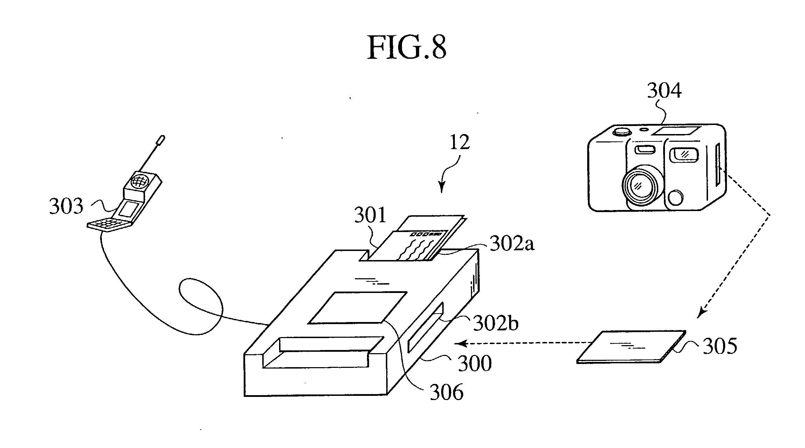

While the media delivery system and the operational steps thereof have been discussed above, in a case where transmission media 22 to be delivered includes the postal card 301, the media post section 12 may preferably have a structural overview shown in FIG. 8. That is, in the media post section 12 shown in FIG. 8, readout processor unit 302a, 302b read out information described in the postal card 301 and data in the digital form (in this case, image data taken by a digital camera 304 and stored in a card memory 305), respectively. Then, readout data is transmitted to a remote destination through a communication terminal 303 such as a portable telephone coupled to the media post section 12. In a case of such a media post section 12, an input section may be preferably composed of a touch panel type structure such that the user is able to press information outputted over an output section 306 by a write pen or a finger to input various information.

In will now be fully understood form the foregoing description that the present invention may be carried out in various embodiments which are not described above. Accordingly, the present invention should be properly limited only from particular inventive items defined in appended claims with the above disclosure in view.

An important advantage of the media delivery system discussed above concerns a capability of quickly transmitting, for example, photographs or images, taken at traveling sites, and recorded voices to desired destinations such as a terminal or terminals of a family or acquaintances. In particular, although there have been many instances where, in a conventional practice, when a tourist posts media such as photographs, postal cards, etc., to Japan from overseas during a short overseas trip, the postal products are received after he arrives at home, in accordance with the media delivery system and the method to be carried out in the illustrated embodiment of the present invention, the presence of use of the media post units located in the overseas tourist sites allows the content of media to be quickly transmitted to the terminal devices at homes. In accordance with the media delivery system of the illustrated embodiment and the method of the present invention, it is possible to transmit the contents of the photographs or the postal cards, which can not be delivered in the prior art practice except a mailing service, as data by means of the media post units located everywhere.

A further important advantage of the media delivery system of the present invention involves a capability of substituting a process of a long-distance transportation, which requires the greatest load of work and the longest time period, to an electronic delivery service in the digital form such that record media can be quickly and reliably delivered to the remote destination, while allowing record media to be delivered at low costs to destinations where there are few instances to transfer or to receive record media.

A further important advantage of the media delivery system of the present invention allows a total cost for the delivery of record media to be maintained at the same cost as that of the direct delivery service or at a lower value than that thereof, even when new media are used in delivery stations, due to a cost reduction merit obtained from mass production of consumer products such as papers, the cassette tapes and the video tapes.

A still further important advantage of the media delivery system of the present invention involves the presence of the same record media to be left at the hand of the addresser for the record media as that is received by the receiver to save time for preliminarily preparing a copy.

A still further important advantage of the media delivery system of the present invention involves a capability of preliminarily selecting the category of information media to be delivered to the receiver when the addresser transmits information such that, according to a receiver's readout circumstance, it is possible for the receiver to receive information in a particular category of information media different from that of the addresser.

A still further important advantage of the media delivery system of the present invention concerns the presence of the server, which registers various information required for delivery service, for allowing the addresser to execute an access to the server to obtain information related to the receiver for transmitting record media to the same to receive the service of media delivery even when the addresser is unable to find out an address list of friends or acquaintances in an event where he wants to transmits the photographs or images taken at the tourist sites and recorded voices.

While, in the example discussed above, the media delivery system has been described as a structure which includes the server, it is possible to obtain the same advantages as those discussed above without the use of the server. That is, by keeping a relevant table correlated with the addresses and the IP addresses in the respective media post units, it is possible for record information to be transmitted without the use of the server. In this instance, since it is necessary to update the relevant table kept in the media post units, the media delivery system serves to implement the displacement operation of media such as an IC card that stores the newest relevant table and to transmit the newest relevant table to the respective media post units at given time intervals.

As previously described above, the media delivery system according to the present invention, as defined in the appended claim 1, allows the contents of first record media to be formed into data at the information transmitting sites to be transmitted as record media whereas the delivery media record reproducing sites are able to record transmitted record media as second record media, thereby making it possible for the content of first record media to be quickly and reliably delivered to a remote destination.

According to the media delivery system, as defined in the appended claim 3 of the present invention, since it is possible to obtain the delivery status of second record media at the information transmitting sites and the delivery media record reproducing sites, record media may be surely delivered to the destination.

According to the media delivery system, as defined in the appended claim 4 of the present invention, even when first record media is composed of the postal card, the content of the postal card is converted into data which can be delivered as record media.

According to the media delivery system, as defined in the appended claim 5 of the present invention, since record media can be transmitted to the delivery media reproducing units from the information transmission devices via the Internet network, record media may be quickly delivered to the remote destination.

According to the media delivery system, as defined in the appended claim 6 of the present invention, since the information transmitting sites convert the content of first record media into data to be transmitted as record information and the delivery media record reproducing sites reproduce received record information as second record media, the content of first record media can be reliably delivered to the remote destination.

According to the media delivery system, as defined in the appended claim 7 of the present invention, since first record media is transmitted after preparing the destination related to the delivery site together with record information, record media can be reliably delivered to the destination.

According to the media delivery system, as defined in the appended claim 8 of the present invention, since record information is transmitted together with information related to the destination site after obtaining the delivery site information at the information transmitting sites by referring to the content of the database, the content of record media can be quickly delivered to the remote destination.

According to the media delivery system, as defined in the appended claim 9 of the present invention, since the content of first record media is transmitted as record media to the information receiver sites via the Internet network, record media can be quickly transmitted to the remote destination.

According to the media delivery system, as defined in the appended claim 10 of the present invention, since the content of first record media is formed into data as record information, which is transmitted together with the receiver site information to allow the information receiving sites to deliver second record media, the content of first record media can be quickly and reliably delivered to the remote destination.

According to the media delivery system, as defined in the appended claim 11 of the present invention, even when first and second record media include the postal cards, second record media can be reproduced as the postal card at the information receiving site by reproducing record information and can be delivered to the destination.

According to the media delivery system, as defined in the appended claim 12 of the present invention, since record media can be transmitted via the Internet network, record media can be quickly delivered to the remote destination.

According to the media delivery system, as defined in the appended claim 13 of the present invention, since the aforementioned delivery site information includes the category of the aforementioned second record media, it is possible for the addresser to select suitable second record media according to the addresser's readout circumstance.

According to the media delivery system, as defined in the appended claim 14 of the present invention, since the aforementioned delivery site information includes the aforementioned second record media, it is possible for the addresser to select suitable second record media according to the addresser's readout circumstance.

According to the record media delivery program, as defined in the appended claim 15 of the present invention, since the information transmitting site converts the content of first record media into data to transmit the same as record information to allow transmitted record information to be recorded as second record media, the content of first record media can be quickly and reliably delivered to the remote destination.

According to the record medium to be stored in the computer, as defined in the appended claim 16 of the present invention, since the information transmitting site allows the content of first record media to be formed into data and transmitted as record media and transmitted record medium to be recorded as second record media, the content of first record media can be quickly and reliably delivered to the remote destination.

The entire content of a Japanese Application No. P2000-308284 with a filing date of October 6, 2000 is herein incorporated by reference.

Although the invention has been described above by reference to certain embodiments of the present invention, the invention is not limited to the embodiments described above and will occur to those skilled in the art, in light of the teachings. The scope of the invention is defined with reference to the following claims.

## Claims

1. A record media delivery system comprising:
an information transmitting section including a readout unit for reading out record information recorded in a first record medium, an input unit for preparing relevant addressee information to which a second record medium is to be delivered, and a transmitting unit for transmitting said. record information and said relevant addressee information via a communication network;
a delivery media recording section including a receiver unit for receiving said record information and said relevant addressee information from said information transmitting section via said communication network, and an output unit for recording said record information on said second record medium, adding said relevant addressee information to said second record medium and outputting said second record medium.

2. The record media delivery system according to claim 1, further comprising:
a memory unit for storing database that keeps said relevant addressee information; and
a server for interconnecting said information transmitting section and said delivery media recording section via said communication network.

3. The record media delivery system according to claim 2, wherein said server unit keeps information related to a delivery status of said second record medium.

4. The record media delivery system according to claim 2, wherein said first and second media include a postal card, said readout unit includes an image scanner and said outputting unit includes a printer.

5. The record media delivery system according to claim 1, wherein said communication network include the Internet.

6. A record media delivery method comprising the steps of:
reading out record information recorded in a first record medium;
preparing relevant addressee information to which said a second record medium is to be delivered;
transmitting said relevant addressee information and said record information via a communication network;
receiving said relevant addressee information and said record information via a communication network;
recording said record information on said second record medium;
adding said relevant addressee information to said second record medium that is recorded with said record information; and
delivering said second record medium by referring to said relevant addressee information.

7. The record media delivery method according to claim 6, further comprising:
reading out information of an address card described with more than or equal to one delivery destination, referring to information of said address card and preparing said relevant addressee information.

8. The record media delivery method according to claim 6, further comprising:
preparing said relevant addressee information of said second record medium by referring to a database that keeps said relevant addressee information connected via said communication network.

9. The record media delivery method according to claim 6, wherein said communication network includes the Internet.

10. An information transmission device comprising:
a readout unit for reading out record information recorded in a first record medium;
an input unit for preparing relevant addressee information to which a second record medium is to be delivered; and
a transmitting unit for transmitting said record information and said relevant addressee information via a communication network.

11. The information transmission device according to claim 10, wherein said first and second record medium include a postal card, and said readout unit includes an image scanner.

12. The information transmission device according to claim 10, wherein said communication network includes the Internet.

13. The information transmission device according to claim 10, wherein said relevant addressee information include a category of said second record medium.

14. A record media delivery program comprising the steps of:
reading out record information recorded in a first record medium;
preparing relevant addressee information to which a second record medium is to be delivered;
transmitting said relevant addressee information and said record information via a communication network;
receiving said relevant addressee information and said record information via said communication network;
recording said record information on a second record medium;
adding said relevant addressee information to said second record medium recorded with said record information; and
delivering said second record medium by referring to said relevant addressee information.

15. A record medium storable in a computer, comprising the steps of:
reading out record information recorded in a first record medium;
preparing relevant addressee information to which a second record medium is to be delivered;
transmitting said relevant addressee information and said record information via a communication network;
receiving said relevant addressee information and said record information via said communication network;
recording said record information on the second record medium;
adding said relevant addressee information to said second record medium recorded with said record information; and
delivering said second record medium by referring to said relevant addressee information.
